# EUROPÄISCHE PATENTSCHRIFT

(11) **EP 3 147 539 B1**
(45) Veröffentlichungstag und Bekanntmachung des Hinweises auf die Patenterteilung: **25.11.2020**
(21) Anmeldenummer: 15187087.0
(22) Anmeldetag: 28.09.2015
(51) Int. Cl.: F16H 3/66

(54) **GETRIEBE FÜR EIN KRAFTFAHRZEUG**
TRANSMISSION FOR A MOTOR VEHICLE
BOITE DE VITESSES D'UN VEHICULE AUTOMOBILE

(43) Veröffentlichungstag der Anmeldung: 29.03.2017
(73) Patentinhaber: ZF Friedrichshafen AG, 88046 Friedrichshafen (DE)
(72) Erfinder: Beck, Stefan, 88097 Eriskirch (DE); Warth, Viktor, 88048 Friedrichshafen (DE); Wechs, Michael, 88138 Weißensberg (DE); Brehmer, Martin, 88069 Tettnang (DE)
(74) Vertreter: ZF Friedrichshafen AG

(56) Entgegenhaltungen:
- DE-A1- 2 945 232
- DE-A1- 3 131 138
- US-B1- 8 617 022

## Beschreibung

Die Erfindung betrifft ein Getriebe für ein Kraftfahrzeug. Ein Getriebe bezeichnet hier insbesondere ein mehrgängiges Getriebe, bei dem eine Vielzahl von Gängen, also feste Übersetzungsverhältnisse zwischen Antriebswelle und Abtriebswelle des Getriebes, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Die Patentanmeldung DE 31 31 138 A1 der Anmelderin beschreibt ein lastschaltbares Planetenrad-Wechselgetriebe mit mehreren gekoppelten Planetenradsätzen. Darin wird ein Stufenplanetensatz verwendet, auf dessen Steg Planetenräder mit unterschiedlichen Wirkdurchmessern angeordnet sind. In der Ausführungsform gemäß Fig. 11 kämmt ein inneres Zentralrad mit dem größeren Wirkdurchmesser der Planetenräder und zwei äußere Zentralräder mit dem je einem der beiden Wirkdurchmesser der Planetenräder des Stufenplanetensatzes. Der Stufenplanetensatz weist somit insgesamt vier Wellen in Drehzahlordnung auf. In weiterer Folge ist eines der beiden äußeren Zentralräder mit einem inneren Zentralrad eines als Plus-Radsatz ausgebildeten zweiten Planetenradsatzes verbunden.

Die Patentanmeldung DE 10 2008 041 192 A1 der Anmelderin beschreibt ein Mehrstufengetriebe, wobei ein erster und vierter Planetenradsatz in einer gemeinsamen Radsatzebene angeordnet sind. Das Hohlrad des vierten Planetenradsatzes ist dabei mit einem Sonnenrad des ersten Planetenradsatzes fest verbunden. Die beiden Stege des ersten und vierten Planetenradsatzes sind ebenso fest miteinander verbunden. Der erste und vierte Planetenradsatz weisen somit zusammen insgesamt vier Wellen in Drehzahlordnung auf.

Im Stand der Technik sind darüber hinaus eine Vielzahl von Fahrzeuggetriebe bekannt, bei denen die Gangbildung durch feste Drehzahlbeziehungen der Wellen eines mehrfach gekoppelten Planetenradsatzsystems erfolgt, welche eine Drehzahlordnung zueinander aufweisen. Beispielhaft sei das Patent US 5,106,352 A genannt, bei dem zwei verschieden große Drehzahlpfade an einen zweifach gekoppelten Planetenradsatz übermittelt werden, welcher vier Wellen in Drehzahlordnung aufweist.

Ein System mit insgesamt fünf Wellen in Drehzahlordnung bietet bereits einen hohen Freiheitsgrad für die Gangbildung. Die fünf Wellen sind dadurch gekennzeichnet, dass die Drehzahlen dieser Wellen in der genannten Reihenfolge linear ansteigen, abnehmen oder gleich sind. In anderen Worten ist die Drehzahl der ersten Welle kleiner gleich der Drehzahl der zweiten Welle. Die Drehzahl der zweiten Welle ist wiederum kleiner gleich der Drehzahl der dritten Welle. Die Drehzahl der dritten Welle ist kleiner gleich der Drehzahl der vierten Welle. Die Drehzahl der vierten Welle ist kleiner gleich der Drehzahl der fünften Welle. Diese Reihenfolge ist auch reversibel, sodass die fünfte Welle die kleinste Drehzahl aufweist, während die erste Welle eine Drehzahl annimmt die größer oder gleich groß wie die Drehzahl der fünfte Welle ist. Zwischen den Drehzahlen aller fünf Wellen besteht dabei stets ein linearer Zusammenhang. Die Drehzahl einer oder mehrerer der fünf Wellen kann dabei auch negative Werte, oder auch den Wert Null annehmen. Die Drehzahlordnung ist daher stets auf den vorzeichenbehafteten Wert der Drehzahlen zu beziehen, und nicht auf deren Betrag.

Ist die Drehzahl von zwei der fünf Wellen fest vorgegeben, so sind die Drehzahlen der verbleibenden drei Wellen festgelegt. Ein Planetenradsatzsystem mit fünf Wellen in Drehzahlordnung ist aber nur durch Koppelung von zumindest drei Einzelplanetenradsätzen erreichbar. Dies bedingt einen erheblichen Bauaufwand, und vergrößert die Abmessungen des Getriebes im Vergleich zu einem Planetenradsatzsystem mit nur vier Wellen in Drehzahlordnung.

Das Gangwechselgetriebe gemäß Fig. 1 der Patentschrift DE 38 18 710 C1 umfasst sogar sechs Wellen in Drehzahlordnung. Dazu sind Zweifach-Planetenrädern eines Planetenradsatzes insgesamt zwei Sonnenräder und zwei Hohlräder zugeordnet. Ein Sonnenrad eines weiteren, als Minus-Radsatz ausgebildeten Einzelplanetenradsatzes ist mit jenem Sonnenrad fest verbunden, welches mit dem kleineren Durchmesser der Zweifach-Planetenräder kämmt. Der Steg, auf dem die Zweifach-Planetenräder drehbar gelagert sind, ist mit dem Steg des weiteren Einzelplanetenradsatzes fest verbunden. Der weitere Einzelplanetenradsatz ist axial neben den Zweifach-Planetenrädern angeordnet, wodurch die axiale Baulänge des Getriebes erhöht wird.

Die axiale Baulänge eines Getriebes ist von hoher Bedeutung für die Anwendung im Kraftfahrzeug-Antriebsstrang. Insbesondere bei Fahrzeugen mit quer zur Fahrtrichtung des Fahrzeugs angeordnetem Antriebsstrang ist auf eine besonders kurze axiale Baulänge zu achten, da das Getriebe üblicherweise im axialen Verbund mit der Verbrennungskraftmaschine und gegebenenfalls einem Anfahrelement zwischen den Längsträgern des Kraftfahrzeug-Vorderbaus angeordnet ist. Bei Hybridfahrzeugen kommt zu diesem Verbund noch eine elektrische Maschine hinzu, wodurch der Bauraumbedarf des Antriebsstranges weiter steigt.

Es ist daher Aufgabe der Erfindung, ein Getriebe für ein Kraftfahrzeug bereitzustellen, welches zumindest fünf Wellen in Drehzahlordnung aufweist und sich dabei durch eine besonders kurze axiale Baulänge auszeichnet.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das Getriebe weist einen als Stufenplanetenradsatz ausgebildeten ersten Planetenradsatz und einen zweiten Planetenradsatz auf. Die Planetenräder des ersten Planetenradsatzes weisen zumindest zwei unterschiedlich große Wirkdurchmesser auf. Der erste Planetenradsatz weist zumindest drei Zentralräder, also Sonnenräder und Hohlräder auf. Demnach weist der erste Planetenradsatz zumindest entweder zwei Sonnenräder und ein Hohlrad oder ein Sonnenrad und zwei Hohlräder auf. Die beiden Zentralräder gleicher Art, also die beiden Sonnenräder oder die beiden Hohlräder, sind unterschiedlichen Wirkdurchmessern der Planetenräder zugeordnet. Der zweite Planetenradsatz weist zwei Zentralräder in Form eines Hohlrades und eines Sonnenrades auf. Eines der Zentralräder des zweiten Planetenradsatzes, also dessen Hohlrad oder dessen Sonnenrad, ist mit einem der Zentralräder des ersten Planetenradsatzes ständig drehfest verbunden.

Erfindungsgemäß unterscheidet sich die Art des Zentralrads des zweiten Planetenradsatzes von der Art jenes Zentralrades des ersten Planetenradsatzes, mit dem es ständig verbunden ist. Demnach besteht die ständig drehfeste Verbindung der Zentralräder nicht zwischen zwei Hohlrädern oder zwischen zwei Sonnenrädern, sondern zwischen Hohlrad und Sonnenrad. Die beiden derart verbundenen Zentralräder unterschiedlicher Art sind dabei in einer gemeinsamen Radsatzebene angeordnet. Ein Steg des ersten Planetenradsatzes ist mit einem Steg des zweiten Planetenradsatzes ständig drehfest verbunden.

Durch diese erfindungsgemäße Zuordnung wird ein Getriebe mit zumindest fünf Wellen in Drehzahlordnung bereitgestellt. Zwei der fünf Wellen werden durch die zumindest zwei freien Zentralräder des ersten Planetenradsatzes gebildet. Eine weitere Welle wird durch die miteinander verbundenen Stege gebildet. Eine weitere Welle wird durch die miteinander drehfest verbundenen Zentralräder des ersten und zweiten Planetenradsatzes gebildet. Eine weitere Welle wird durch das freie Zentralrad des zweiten Planetenradsatzes gebildet.

Durch die ständige Sonnenrad-Hohlrad-Koppelung der beiden Planetenradsätze in einer Radsatzebene zeichnet sich das Getriebe durch eine besonders kurze axiale Baulänge aus. Die gemeinsame Radsatzebene bedeutet in diesem Zusammenhang, dass die Sonnenrad-Hohlrad-Koppelung der beiden Planetenradsätze in einer Schnittebene des Getriebes normal zur Getriebehauptachse angeordnet ist. Die beiden ständig miteinander verbundenen Zentralräder der beiden Planetenradsätze sind daher nicht axial nebeneinander angeordnet. Stattdessen sind die ständig miteinander verbundenen Zentralräder der beiden Planetenradsätze im Wesentlichen radial übereinander angeordnet, in einer gemeinsamen Ebene.

Die ständige drehfeste Verbindung der beiden Stege ist konstruktiv besonders vorteilhaft, da der Steg eines Planetenradsatzes durch die Drehlagerung der Planetenräder eine verhältnismäßig komplexe Geometrie aufweist. In Kombination mit der Sonnenrad-Hohlrad-Koppelung in einer Radsatzebene ermöglicht die ständige Verbindung der beiden Stege eine Ausführung als einteiliges Bauteil, welches sowohl den Steg des ersten Planetenradsatzes als auch den Steg des zweiten Planetenradsatzes aufnehmen kann. Dies begünstigt die kompakte Bauweise des Getriebes, da allfällige Schnittstellen entfallen. Aber auch eine konstruktiv getrennte Ausführung der beiden Stege ist denkbar, da durch die Komplexität der Stege ebenso kompakte Ausführungen mit einer drehfesten Schnittstelle möglich sind.

Sowohl der erste als auch der zweite Planetenradsatz kann auch als Plus-Radsatz ausgebildet sein. Ein Plus-Radsatz unterscheidet sich zu einem Minus-Radsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren. Bei einem als Stufenplanetenradsatz ausgebildeten Planetenradsatz kann auch nur einem der beiden Wirkdurchmesser der Planetenräder ein weiterer, äußerer Satz Planetenräder zugeordnet sein, während der andere Wirkdurchmesser direkt mit dem Sonnenrad und dem Hohlrad kämmt.

Vorzugsweise sind die miteinander verbundenen Stege des ersten und zweiten Planetenradsatzes mit einer Abtriebswelle des Getriebes ständig verbunden. Eine solche ständige Verbindung kann auch gegeben sein, wenn die Stege fester Bestandteil der Abtriebswelle sind. Eine Zuordnung der Stege zur Abtriebswelle ist hinsichtlich der Bauteilbelastung vorteilhaft, da der Steg bei einem als Minus-Radsatz wirkenden Planetenradsatz stets als Summenwelle wirkt. Die als Differenzwellen wirkenden Zentralräder sind somit stets weniger belastet als die Summenwelle, wodurch die Belastung der als Differenzwellen wirkenden Zentralräder stets unterhalb des Abtriebs-Drehmoments liegt.

Gemäß einer Ausführungsform weist der erste Planetenradsatz vier Zentralräder auf, also zwei Sonnenräder und zwei Hohlräder. Jedes der beiden Sonnenräder kämmt mit einem unterschiedlichen Wirkdurchmesser der Planetenräder, in gleicher Weise auch jedes der beiden Hohlräder. Dadurch wird das Getriebe um eine freie Welle erweitert, und bildet demnach ein Getriebe mit sechs Wellen in Drehzahlordnung. Die Möglichkeiten zur Gangbildung werden dadurch weiter erhöht.

Vorzugsweise ist eines der Zentralräder des ersten Planetenradsatzes, welches mit keinem der Zentralräder des zweiten Planetenradsatzes ständig drehfest verbunden ist, mittels eines Schaltelements drehfest festsetzbar. Ist beispielsweise ein als Hohlrad ausgebildetes Zentralrad des ersten Planetenradsatzes an der Sonnenrad-Hohlrad-Koppelung zwischen dem ersten und zweiten Planetenradsatz beteiligt, und weist der erste Planetenradsatz zwei als Sonnenräder ausgebildete Zentralräder auf, so kann einem oder jedem dieser beiden Sonnenräder ein Schaltelement zur drehfesten Festsetzung zugeordnet sein. Durch Schließen des Schaltelements wird somit eine der fünf oder sechs Wellen des Getriebes drehfest festgesetzt. Wird an einer weiteren Welle eine Drehzahl fest vorgegeben, so sind die Drehzahlen an sämtlichen weiteren Wellen festgelegt. Besonders vorteilhaft ist dabei die drehfeste Festsetzbarkeit an Zentralrädern gleicher Art, also an zwei Sonnenräder oder an zwei Hohlräder, da dies den Aufbau des Getriebes vereinfacht.

Vorzugsweise ist jenes Zentralrad des zweiten Planetenradsatzes, welches mit keinem der Zentralräder des ersten Planetenradsatzes ständig drehfest verbunden ist, mittels eines weiteren Schaltelements drehfest festsetzbar. Ist beispielsweise das als Sonnenrad ausgebildete Zentralrad des zweiten Planetenradsatzes an der Sonnenrad-Hohlrad-Koppelung zwischen dem ersten und zweiten Planetenradsatz beteiligt, so ist das als Hohlrad ausgebildete Zentralrad des zweiten Planetenradsatzes drehfest festsetzbar. Die drehfeste Festsetzbarkeit des freien Zentralrads des zweiten Planetenradsatzes erleichtert insbesondere bei kleinerer Standgetriebeübersetzung des zweiten Planetenradsatzes im Vergleich zu den Standgetriebeübersetzungen des als Stufenplanetenradsatz ausgebildeten ersten Planetenradsatzes die Bildung von Gängen mit kurzer Übersetzung, also Anfahrgängen.

Gemäß einer Ausführungsform ist zumindest eines der Zentralräder des ersten Planetenradsatzes, welches mit keinem der Zentralräder des zweiten Planetenradsatzes ständig drehfest verbunden ist, mittels eines Schaltelements mit einer Antriebswelle des Getriebes verbindbar. Eine schaltbare Anbindung der Antriebswelle an zumindest eine der fünf oder sechs Wellen des Getriebes erleichtert die Gangbildung. Durch Anordnung dieser schaltbaren Anbindung an zumindest einem freien Zentralrad des ersten Planetenradsatzes kann eine große Standgetriebeübersetzung des als Stufenplanetenradsatzes ausgebildeten ersten Planetenradsatzes genutzt werden. Vorteilhafterweise kann an zwei freien Zentralrädern des ersten Planetenradsatzes eine schaltbare Anbindung an die Antriebswelle erfolgen.

Vorzugsweise ist jenes Zentralrad des zweiten Planetenradsatzes, welches mit keinem der Zentralräder des ersten Planetenradsatzes ständig drehfest verbunden ist, mittels eines Schaltelements mit der Antriebswelle verbindbar. Eine solche Anbindung an das freie Zentralrad des zweiten Planetenradsatzes ist besonders bei verhältnismäßig kleiner Standgetriebeübersetzung des zweiten Planetenradsatzes vorteilhaft für die Bildung langer Gänge, bei denen die Abtriebswellendrehzahl höher ist als die Antriebswellendrehzahl.

Der Sonnenrad-Hohlrad-Koppelung zwischen erstem und zweitem Planetenradsatz ist vorzugsweise keine schaltbare Anbindung an die Antriebswelle, bzw. keine drehfeste Festsetzbarkeit zugeordnet. Denn die Sonnenrad-Hohlrad-Koppelung kann durch die Verbindung der beiden Stege beidseitig umschlossen sein, wodurch die Zugänglichkeit eingeschränkt wird. Es sind jedoch auch Ausführungsformen denkbar, die eine solche schaltbare Anbindung an die Sonnenrad-Hohlrad-Koppelung aufweisen. Dies kann sogar zu einer Vereinfachung des Getriebes führen, besonders wenn das Getriebe lediglich fünf Wellen in Drehzahlordnung umfasst.

Gemäß einer Ausführungsform ist das als Sonnenrad ausgebildete Zentralrad des zweiten Planetenradsatzes mit jenem als Hohlrad ausgebildeten Zentral des ersten Planetenradsatzes ständig drehfest verbunden, welches mit dem kleineren Wirkdurchmesser der Planetenräder kämmt. Durch die Anbindung am kleineren Hohlrad des ersten Planetenradsatzes wird ein radial kompakter Aufbau des Getriebes begünstigt. Dazu ist es vorteilhaft, das als Sonnenrad ausgebildete Zentralrad des ersten Planetenradsatzes, welches mit dem größeren Wirkdurchmesser der Planetenräder kämmt, mittels eines ersten Schaltelements drehfest festsetzbar auszuführen. Weiters ist es günstig, das als Sonnenrad ausgebildete Zentralrad des ersten Planetenradsatzes, welches mit dem kleineren Wirkdurchmesser der Planetenräder kämmt, mittels eines zweiten Schaltelements drehfest festsetzbar auszuführen. Das als Hohlrad ausgebildete Zentralrad des zweiten Planetenradsatzes ist bevorzugt mittels eines dritten Schaltelements drehfest festsetzbar auszuführen. Dieses Hohlrad kann durch Schließen eines vierten Schaltelements mit der Antriebswelle des Getriebes verbindbar sein. Das als Hohlrad ausgebildete Zentralrad des ersten Planetenradsatzes, welches mit dem größeren Wirkdurchmesser der Planetenräder kämmt, ist vorzugsweise mittels eines fünften Schaltelements mit der Antriebswelle des Getriebes verbindbar. Ein Getriebe mit einer solchen Zuordnung der einzelnen Getriebeelemente weist eine kompakte Bauweise, geringe Bauteilbelastungen sowie einen guten Verzahnungswirkungsgrad auf.

Durch selektives paarweises Schließen der ersten bis fünften Schaltelemente sind zumindest sechs Vorwärtsgänge zwischen der Antriebswelle und der Abtriebswelle darstellbar. Der erste Vorwärtsgang wird durch Schließen des dritten Schaltelements und des fünften Schaltelements gebildet. Der zweite Vorwärtsgang wird durch Schließen des zweiten Schaltelements und des fünften Schaltelements gebildet. Der dritte Vorwärtsgang wird durch Schließen des ersten Schaltelements und des fünften Schaltelements gebildet. Der vierte Vorwärtsgang wird durch Schließen des vierten Schaltelements und des fünften Schaltelements gebildet. Der fünfte Vorwärtsgang wird durch Schließen des ersten Schaltelements und des vierten Schaltelements gebildet. Der sechste Vorwärtsgang wird durch Schließen des zweiten Schaltelements und des vierten Schaltelements gebildet. Dadurch wird, bei geeigneter Wahl der Standgetriebeübersetzungen der Planetenradsätze, eine für die Anwendung im Kraftfahrzeug gut geeignete Übersetzungsreihe erzielt. Zudem weisen zwei benachbarte Vorwärtsgänge stets ein Schaltelement auf, das in beiden diesen Gängen geschlossen ist. Dies vereinfacht den Schaltvorgang und verkürzt die Schaltdauer zwischen benachbarten Vorwärtsgängen. Da das fünfte Schaltelement im ersten bis vierten Vorwärtsgang geschlossen ist, ermöglicht das Schaltschema einen derart vereinfachten Schaltvorgang zwischen jedem der ersten vier Vorwärtsgänge. Dies gilt auch für einen Schaltvorgang zwischen den Vorwärtsgängen vier und sechs, bzw. drei und fünf, da in diesen Gängen das vierte Schaltelement, bzw. das erste Schaltelement geschlossen ist.

Das als Sonnenrad ausgebildete Zentralrad des ersten Planetenradsatzes, welches mit dem größeren Wirkdurchmesser der Planetenräder kämmt, kann mittels eines sechsten Schaltelements mit der Antriebswelle verbindbar sein. Dadurch wird die Bildung eines Rückwärtsganges zwischen der Antriebswelle und der Abtriebswelle ermöglicht, konkret durch Schließen des dritten Schaltelements und des sechsten Schaltelements. Ein weiterer, optionaler Rückwärtsgang ist durch Schließen des zweiten Schaltelements und des dritten Schaltelements möglich. Der weitere Rückwärtsgang ist durch eine längere Übersetzung als der durch Schließen des dritten und sechsten Schaltelements gebildete Rückwärtsgang gekennzeichnet.

Gemäß einer möglichen Ausgestaltung weist das Getriebe eine elektrische Maschine mit einem drehbaren Rotor und einem drehfesten Stator auf. Der Rotor ist dabei mit der Antriebswelle ständig verbunden. Das Getriebe kann dadurch Funktionen wie Boosten oder Rekuperieren in einem Hybridantriebsstrang eines Kraftfahrzeugs übernehmen. Durch Rückwärtsdrehung des Rotors entgegen einer Vorzugsdrehrichtung der Antriebswelle und eingelegtem Vorwärtsgang kann die Abtriebswelle rückwärts gedreht werden, wodurch ein Rückwärtsfahren eines Kraftfahrzeugs mit einem solchen Getriebe ermöglicht wird. Alternativ ist eine Anbindung der elektrischen Maschine auch an einer anderen Welle des Getriebes denkbar.

Prinzipiell kann jedes der sechs Schaltelemente als formschlüssiges Schaltelement, also beispielsweise als Klauenkupplung, oder als kraftschlüssiges Schaltelement ausgebildet sein, also beispielsweise als Lamellenkupplung. Vorzugsweise sind das dritte und/oder das fünfte Schaltelement als formschlüssige Schaltelemente ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Durch die im geöffneten Zustand geringen Schleppverluste wird der Wirkungsgrad des Getriebes verbessert, besonders da das dritte Schaltelement lediglich im ersten der sechs Vorwärtsgänge geschlossen ist. Das dritte Schaltelement ist daher bei Betrieb des Getriebes im Antriebsstrang eines Kraftfahrzeugs überwiegend geöffnet.

Dem Getriebe kann in bekannter Weise ein Anfahrelement vorgeschalten werden, beispielsweise eine nasse oder trockene Anfahrkupplung oder ein hydrodynamischer Drehmomentwandler, um beim Anfahrvorgang einen Drehzahlausgleich zwischen einer getriebeexternen Antriebseinheit und der Antriebswelle zu ermöglichen. Alternativ dazu kann ein getriebeinternes Schaltelement als Anfahrelement vorgesehen sein, welches als kraftschlüssiges Schaltelement ausgebildet sein muss. Vorzugsweise wird dazu das dritte Schaltelement verwendet, da das dritte Schaltelement im ersten Vorwärtsgang und gegebenenfalls auch im Rückwärtsgang geschlossen ist. Alternativ dazu kann das das fünfte Schaltelement als Anfahrelement für das Anfahren in Vorwärtsrichtung herangezogen werden. Als Anfahrelement für das Anfahren in Rückwärtsrichtung kann in diesem Fall das sechste Schaltelement herangezogen werden.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden. Unter einer ständig drehfesten Verbindung ist eine Verbindung zu verstehen, bei der die miteinander verbundenen Elemente stets mit der gleichen Drehzahl drehen.

Unter dem Begriff "Schließen eines Schaltelements" wird im Zusammenhang mit der Gangbildung ein Vorgang verstanden, bei dem das Schaltelement so angesteuert wird, dass es am Ende des Schließvorgangs ein hohes Maß an Drehmoment überträgt. Während formschlüssige Schaltelemente im "geschlossenen" Zustand keine Differenzdrehzahl zulassen, ist bei kraftschlüssigen Schaltelementen im "geschlossenen" Zustand die Ausbildung einer geringen Differenzdrehzahl zwischen den Schaltelementhälften gewollt oder ungewollt möglich.

Ausführungsbeispiele der Erfindung sind nachfolgend anhand der beigefügten Figuren detailliert beschrieben.
- Fig. 1: zeigt schematisch ein Getriebe entsprechend eines ersten Ausführungsbeispiels der Erfindung.
- Fig. 2: zeigt einen Drehzahlplan für das Getriebe gemäß dem ersten Ausführungsbeispiel.
- Fig. 3: zeigt ein Schaltschema für das Getriebe entsprechend dem ersten Ausführungsbeispiels der Erfindung.
- Fig. 4: zeigt schematisch ein Getriebe entsprechend eines zweiten Ausführungsbeispiels der Erfindung.
- Fig. 5: zeigt schematisch ein Getriebe entsprechend eines dritten Ausführungsbeispiels der Erfindung.
- Fig. 6: zeigt ein Schaltschema für das Getriebe entsprechend dem dritten Ausführungsbeispiels der Erfindung.
- Fig. 7: zeigt schematisch ein Getriebe entsprechend eines vierten Ausführungsbeispiels der Erfindung.
- Fig. 8: zeigt ein Schaltschema für das Getriebe entsprechend dem vierten Ausführungsbeispiels der Erfindung.
- Fig. 9: zeigt einen Antriebsstrang eines Kraftfahrzeugs.

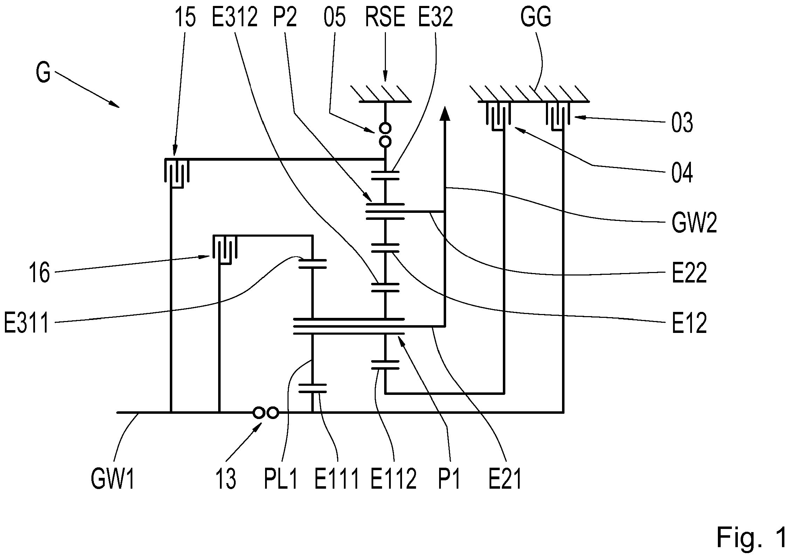

Figur 1 zeigt schematisch ein Getriebe G entsprechend eines ersten Ausführungsbeispiels der Erfindung. Das Getriebe G weist einen ersten Planetenradsatz P1 auf, welcher als ein Stufenplanetenradsatz ausgebildet ist. Das Getriebe G weist ferner einen zweiten Planetenradsatz P2 auf, welcher als ein einfacher Minus-Radsatz ausgebildet ist. Der erste Planetenradsatz P1 weist insgesamt vier Zentralräder E111, E112, E311, E312 auf, nämlich die beiden als Sonnenräder ausgebildeten Zentralräder E111, E112 und die beiden als Hohlräder ausgebildeten Zentralräder E311, E312. Die Planetenräder PL1 des ersten Planetenradsatzes P1 weisen zwei verschieden große Wirkdurchmesser auf. Das als Sonnenrad ausgebildete Zentralrad E111 kämmt mit dem größeren Wirkdurchmesser der Planetenräder PL1. Das als Sonnenrad ausgebildete Zentralrad E112 kämmt mit dem kleineren Wirkdurchmesser der Planetenräder PL1. Das als Hohlrad ausgebildete Zentralrad E311 kämmt mit dem größeren Wirkdurchmesser der Planetenräder PL1. Das als Hohlrad ausgebildete Zentralrad E312 kämmt mit dem kleineren Wirkdurchmesser der Planetenräder PL1. Die Planetenräder PL1 sind an einem Steg E21 des ersten Planetenradsatzes P1 drehbar gelagert. Ein als Sonnenrad ausgebildetes Zentralrad E12 des zweiten Planetenradsatzes P2 ist mit dem Zentralrad E312 des ersten Planetenradsatzes P1 ständig drehfest verbunden. Die beiden Planetenradsätze P1, P2 sind daher über eine Sonnenrad-Hohlrad-Koppelung miteinander verbunden, wobei diese Koppelung in einer Radsatzebene RSE liegt, in der sowohl ein Abschnitt des Sonnenrads als auch ein Abschnitt des Hohlrads liegt. Ein Steg E22 des zweiten Planetenradsatzes P2 ist mit dem Steg E21 des ersten Planetenradsatzes P1 ständig drehfest verbunden. Die beiden Planetenradsätze P1, P2 sind daher sowohl über die Sonnenrad-Hohlrad-Koppelung als auch durch die Verbindung der beiden ge E21, E22 miteinander wirkverbunden. Somit weisen der erste Planetenradsatz P1 und der zweite Planetenradsatz P2 zusammen insgesamt sechs Wellen auf.

Das Zentralrad E111 ist über ein erstes Schaltelement 03 drehfest festsetzbar, indem es schaltbar mit einem Gehäuse GG oder mit einem anderen drehfesten Bauelement des Getriebes G verbunden ist. Das Zentralrad E112 ist über ein zweites Schaltelement 04 in gleicher Weise drehfest festsetzbar. Das als Hohlrad ausgebildete Zentralrad E32 des zweiten Planetenradsatzes P2 ist über ein drittes Schaltelement 05 in gleicher Weise drehfest festsetzbar. Eine Antriebswelle GW1 des Getriebes G ist über ein viertes Schaltelement 15 mit dem Zentralrad E32 des zweiten Planetenradsatzes P2 verbindbar. Das als Hohlrad ausgebildete Zentralrad E311 des ersten Planetenradsatzes P1 ist über ein fünftes Schaltelement 16 mit der Antriebswelle GW1 verbindbar. Das als Sonnenrad ausgebildete Zentralrad E111 des ersten Planetenradsatzes P1 ist über ein sechstes Schaltelement 13 mit der Antriebswelle GW1 verbindbar.

Die Schaltelemente 03, 04, 15, 16 sind schematisch als kraftschlüssige Lamellenschaltelemente ausgebildet. Das dritte Schaltelement 05 und das sechste Schaltelement 13 sind schematisch als formschlüssige Schaltelemente ausgebildet. Prinzipiell kann jedes der Schaltelemente 03, 04, 05, 15, 16, 13 als kraftschlüssiges oder als formschlüssiges Schaltelement ausgebildet sein. Das dritte Schaltelement 05 und das sechste Schaltelement 13 eignen sich jedoch besonders für die Ausbildung als formschlüssige Schaltelemente.

Die miteinander verbundenen Stege E21, E22 der beiden Planetenradsätze P1, P2 sind mit einer Abtriebswelle GW2 des Getriebes G ständig verbunden. An einer äußeren Schnittstelle der Abtriebswelle GW2 ist eine nicht dargestellte Verzahnung vorgesehen, welche mit einer Verzahnung einer nicht dargestellten, zur Abtriebswelle GW2 achsparallel angeordneten Welle kämmt. Das Getriebe G ist somit für die Anwendung in einem Kraftfahrzeug-Antriebsstrang geeignet, welcher quer zur Fahrtrichtung des Kraftfahrzeugs angeordnet ist.

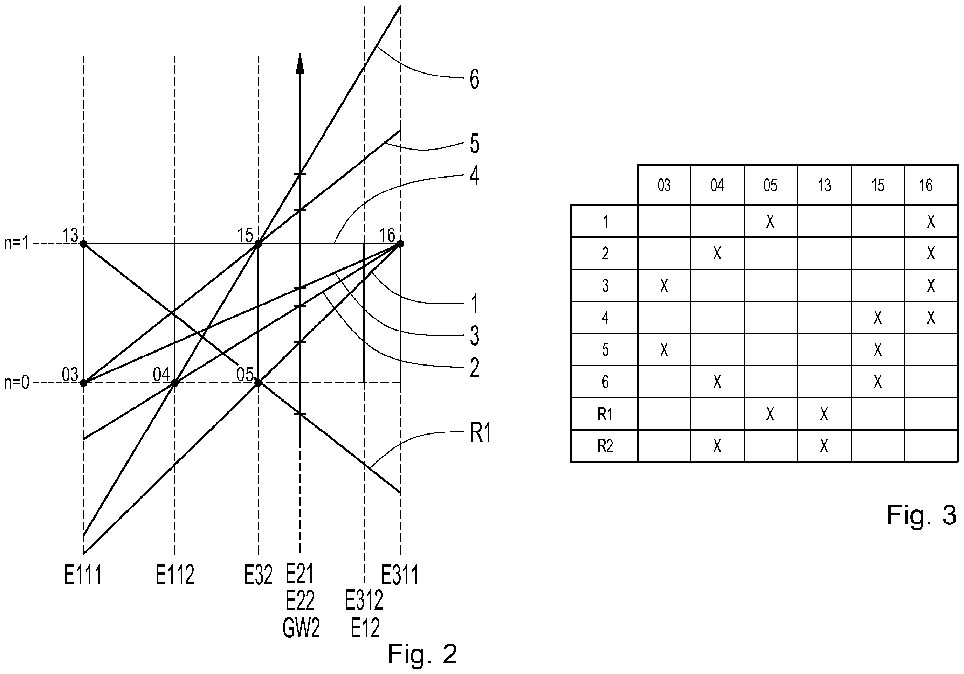

Figur 2 zeigt einen Drehzahlplan des Getriebes G gemäß dem ersten Ausführungsbeispiel. Darin sind in vertikaler Richtung die Drehzahlen der sechs Wellen des Getriebes G im Verhältnis zur Drehzahl n der Antriebswelle GW1 aufgetragen. Die maximal auftretende Drehzahl n der Antriebswelle GW1 ist auf den Wert 1 normiert. Die Abstände zwischen den sechs Wellen ergeben sich durch die Standgetriebeübersetzungen des ersten und zweiten Planetenradsatzes P1, P2. Das als Sonnenrad ausgebildete Zentralrad E111 ist Bestandteil der in Drehzahlordnung ersten Welle des Getriebes G. Das als Sonnenrad ausgebildete Zentralrad E112 ist Bestandteil der in Drehzahlordnung zweiten Welle des Getriebes G. Das als Hohlrad ausgebildete Zentralrad E32 des zweiten Planetenradsatzes P2 ist Bestandteil der in Drehzahlordnung dritten Welle. Die beiden Stege E21, E22 der beiden Planetenradsätze P1, P2 sind durch ihre ständige Verbindung als gemeinsame Welle anzusehen und sind mit der Abtriebswelle GW2 ständig verbunden, so dass diese Elemente Bestandteile der in Drehzahlordnung vierten Welle bilden. Das als Hohlrad ausgebildete Zentralrad E312 des ersten Planetenradsatzes P1 und das als Sonnenrad ausgebildete Zentralrad E12 des zweiten Planetenradsatzes P2 sind durch ihre ständige drehfeste Verbindung Bestandteile der in Drehzahlordnung fünften Welle. Das als Hohlrad ausgebildete Zentralrad E311 ist Bestandteil der in Drehzahlordnung sechsten Welle. Der in Drehzahlordnung ersten Welle sind das erste Schaltelement 03 und das sechste Schaltelement 13 zugeordnet. Der in Drehzahlordnung zweiten Welle ist das zweite Schaltelement 04 zugeordnet. Der in Drehzahlordnung dritten Welle ist das dritte Schaltelement 05 und das vierte Schaltelement 15 zugeordnet. Der in Drehzahlordnung sechsten Welle ist das fünfte Schaltelement 16 zugeordnet. Zu einem bestimmten Betriebspunkt gehörende Drehzahlverhältnisse lassen sich im Drehzahlplan durch eine Gerade verbinden. Sind die Drehzahlen von zwei der sechs Wellen bekannt, so lässt sich dadurch im Drehzahlplan auch die Drehzahl der verbleibenden vier Wellen ablesen. Die Darstellung dient nur zur Anschauung und ist nicht maßstäblich.

Figur 3 zeigt ein Schaltschema des Getriebes G gemäß dem ersten Ausführungsbeispiel. In den Zeilen des Schaltschemas sind sechs Vorwärtsgänge 1 bis 6 sowie zwei Rückwärtsgänge R1, R2 angegeben. In den Spalten des Schaltschemas ist durch ein X gekennzeichnet, welche der Schaltelemente 03, 04, 05, 15, 16, 13 in welchem Vorwärtsgang 1 bis 6, beziehungsweise Rückwärtsgang R1, R2 geschlossen sind. Durch den in Figur 2 dargestellten Drehzahlplan, in welchem die Vorwärtsgänge 1 bis 6 sowie der Rückwärtsgang R1 ebenso dargestellt sind, und durch das in Figur dargestellte Schaltschema wird die Funktionsweise des Getriebes G gemäß dem ersten Ausführungsbeispiel deutlich.

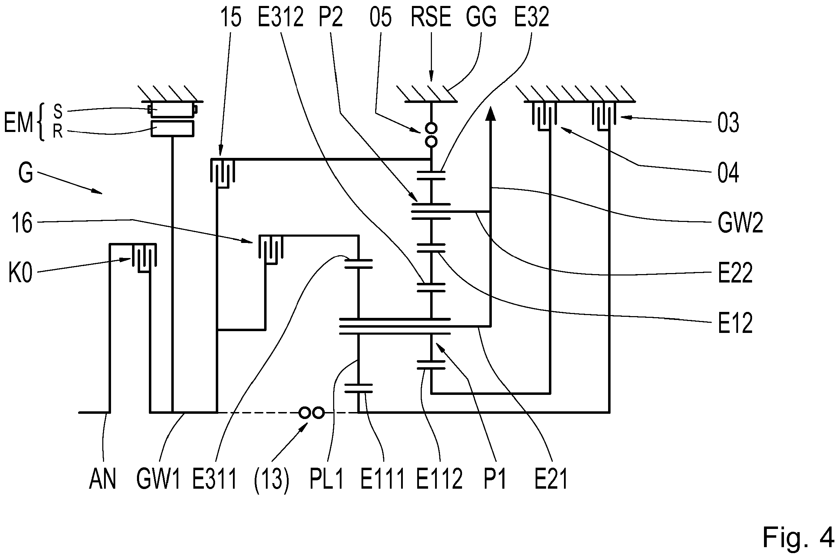

Figur 4 zeigt schematisch ein Getriebe G entsprechend eines zweiten Ausführungsbeispiels der Erfindung, welches im Wesentlichen dem in Figur 1 dargestellten ersten Ausführungsbeispiel entspricht. Das Getriebe G weist nun eine elektrische Maschine EM auf, welche einen drehfesten Stator S und einen drehbaren Rotor R umfasst. Der Rotor R ist mit der Antriebswelle GW1 ständig verbunden. Die elektrische Maschine EM ist dazu eingerichtet die Antriebswelle GW1 anzutreiben oder von dieser Leistung aufzunehmen. Dadurch ist das Getriebe G gemäß dem zweiten Ausführungsbeispiel für die Verwendung im Antriebsstrang eines Hybridfahrzeuges geeignet. Um einen rein elektrischen Fahrbetrieb zu ermöglichen, ist eine getriebeexterne Antriebseinheit durch eine Trennkupplung K0 von der Antriebswelle GW1 entkoppelbar. Die Ausgangswelle der getriebeexternen Antriebseinheit ist dann mit einer Anschlusswelle AN verbunden, welche über die Trennkupplung K0 mit der Antriebswelle GW1 verbindbar ist. Der in Figur 2 dargestellte Drehzahlplan und das in Figur 3 dargestellte Schaltschema sind auch für das in Fig. 4 dargestellte zweite Ausführungsbeispiel anwendbar.

Weist das Getriebe G eine elektrische Maschine EM auf, so ist eine Rückwärtsdrehung der Abtriebswelle GW2 auch durch Rückwärtsdrehung des Rotors R entgegen einer Vorzugsdrehrichtung der Antriebswelle GW1 und durch Einlegen eines Vorwärtsganges möglich. Die Trennkupplung K0 ist dafür zu öffnen, um die getriebeexterne Antriebseinheit nicht rückwärts mitzudrehen. Das sechste Schaltelement 13, welches lediglich zur Bildung eines mechanischen Rückwärtsganges zwischen der Antriebswelle GW1 und der Abtriebswelle GW2 benötigt wird, ist daher nur optional erforderlich. Das Vorsehen des sechsten Schaltelements 13 kann dann vorteilhaft sein, wenn ein Betrieb der elektrischen Maschine EM aufgrund äußerer Einflüsse nicht möglich ist.

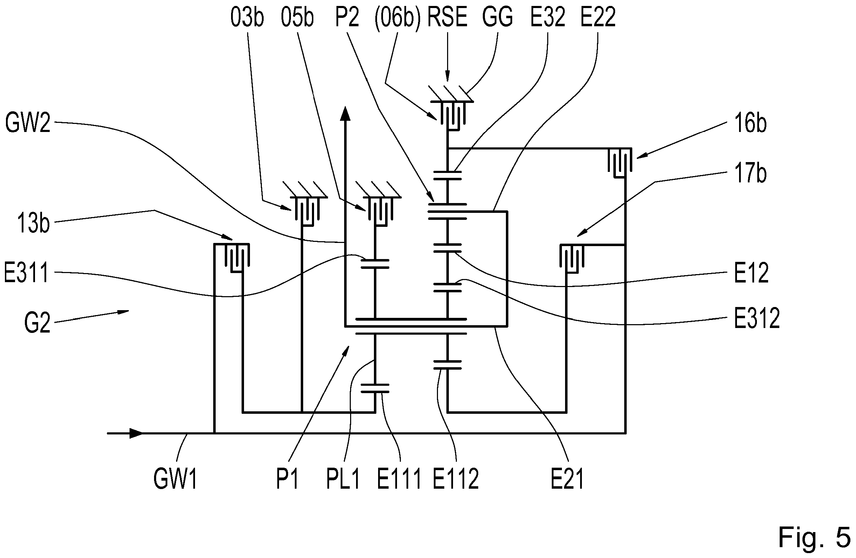

Figur 5 zeigt schematisch ein Getriebe G2 entsprechend eines dritten Ausführungsbeispiels der Erfindung, welches in gleicher Weise einen ersten Planetenradsatz P1 und einen zweiten Planetenradsatz P2 aufweist. Der Planetenradsatz P1 ist wiederum als Stufenplanetenradsatz ausgebildet und weist ebenso insgesamt vier Zentralräder E111, E112, E311, E312 auf. Der zweite Planetenradsatz P2 ist wiederum als einfacher Minus-Radsatz ausgebildet und weist zwei Zentralräder E12, E32 auf. Auch die Koppelung der beiden Planetenradsätze P1, P2 ist identisch zu der Koppelung der Planetenradsätze P1, P2 gemäß dem ersten Ausführungsbeispiel. Das Getriebe G2 unterscheidet sich maßgeblich durch die Zuordnung der Schaltelemente zu den verschiedenen Zentralrädern des Getriebes G2 und damit auch durch die Gangbildung. Das als Sonnenrad ausgebildete Zentralrad E111, welches mit dem größeren Wirkdurchmesser der Planetenräder PL1 kämmt, ist durch ein erstes Schaltelement 03b drehfest festsetzbar. Das als Hohlrad ausgebildete Zentralrad E311, welches mit dem größeren Wirkdurchmesser der Planetenräder PL1 kämmt, ist durch ein zweites Schaltelement 05b drehfest festsetzbar. Das Zentralrad E111 ist ferner über ein drittes Schaltelement 13b mit der Antriebswelle GW1 des Getriebes G2 verbindbar. Das als Hohlrad ausgebildete Zentralrad E32 des zweiten Planetenradsatzes P2 ist über ein viertes Schaltelement 16b mit der Antriebswelle GW1 verbindbar. Das als Sonnenrad ausgebildete Zentralrad E112, welches mit dem kleineren Wirkdurchmesser der Planetenräder PL1 kämmt, ist durch ein fünftes Schaltelement 17b mit der Antriebswelle GW1 verbindbar. Für die Bildung eines mechanischen Rückwärtsganges zwischen der Antriebswelle GW1 und der Abtriebswelle GW2 des Getriebes G2 kann ein sechstes Schaltelement 06b vorgesehen sein, welches dazu eingerichtet ist das als Hohlrad ausgebildete Zentralrad E32 des zweiten Planetenradsatzes P2 drehfest festzusetzen. In gleicher Weise wie im Getriebe G entsprechend dem zweiten Ausführungsbeispiel kann das Getriebe G2 eine elektrische Maschine EM aufweisen, deren drehbarer Rotor mit der Antriebswelle GW1 ständig verbunden ist. Zur Entkoppelung einer getriebeexternen Antriebseinheit kann dazu eine Trennkupplung K0 vorgesehen sein, durch welche die getriebeexterne Antriebseinheit mit der Antriebswelle GW1 des Getriebes G2 verbindbar ist. Die getriebeexterne Antriebseinheit ist in diesem Fall mit einer Anschlusswelle AN verbunden, welche über die Trennkupplung K0 mit der Antriebswelle GW1 verbindbar ist. Dies ist aus Gründen der Übersichtlichkeit nicht in den Figuren dargestellt.

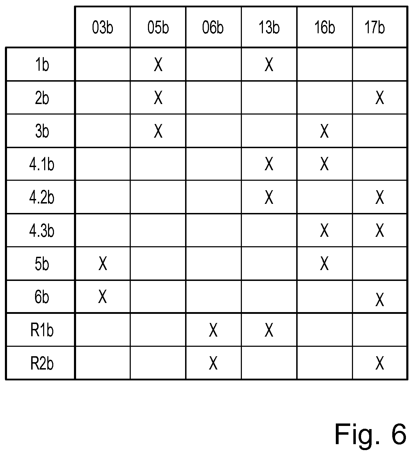

Figur 6 zeigt ein Schaltschema für das Getriebe G2 gemäß dem dritten Ausführungsbeispiel der Erfindung. In den Zeilen des Schaltschemas sind sechs Vorwärtsgänge 1b bis 6b sowie zwei Rückwärtsgänge R1b, R2b angeführt. In den Spalten des Schaltschemas ist durch ein X gekennzeichnet, welche der Schaltelemente 03b, 05b, 13b, 16b, 17b, 06b in welchem Vorwärtsgang 1b bis 6b, beziehungsweise Rückwärtsgang R1b, R2b geschlossen sind. Das Getriebe G2 weist insgesamt drei Möglichkeiten zur Bildung des vierten Vorwärtsganges 4b auf, welche im Schaltschema als 4.1b, 4.2b, 4.3b gekennzeichnet sind. In sämtlichen Vorwärtsgängen 4.1b, 4.2b, 4.3b wird die Antriebswelle GW1 mit zwei der sechs Wellen des Getriebes G2 verbunden, wodurch alle sechs Wellen des Getriebes G2 die gleiche Drehzahl aufweisen. Die als 4.1b bezeichnete Variante des vierten Vorwärtsganges ist dabei besonders vorteilhaft, da beim Schaltvorgang vom dritten Vorwärtsgang 3b das vierte Schaltelement 16b geschlossen bleiben kann und da beim Schaltvorgang in den fünften Vorwärtsgang 5b das dritte Schaltelement 13b geschlossen bleiben kann.

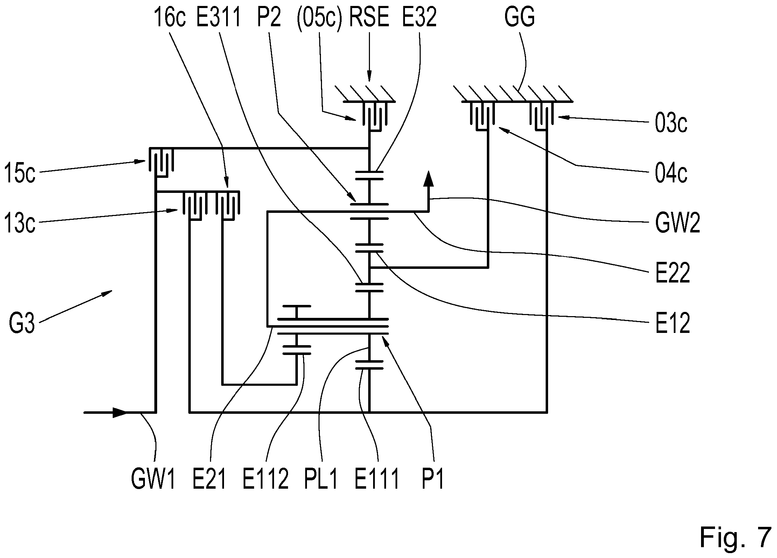

Figur 7 zeigt schematisch ein Getriebe G3 entsprechend eines vierten Ausführungsbeispiels der Erfindung, welches ebenso wie die vorangegangenen Ausführungsbeispiele einen ersten als Stufenplanetenradsatz ausgebildeten Planetenradsatz P1 und einen als einfachen Minus-Radsatz ausgebildeten zweiten Planetenradsatz P2 aufweist. Die Koppelung zwischen den beiden Planetenradsätzen P1, P2 erfolgt wiederum durch ständige drehfeste Verbindungen der beiden Stege E21, E22 und durch eine Sonnenrad-Hohlrad-Koppelung. Dazu ist das als Hohlrad ausgebildete Zentralrad E311 des ersten Planetenradsatzes P1, welches mit dem größeren Wirkdurchmesser der Planetenräder PL1 kämmt, ständig drehfest mit dem als Sonnenrad ausgebildeten Zentralrad E12 des zweiten Planetenradsatzes P2 verbunden. Das Getriebe G3 weist lediglich fünf Wellen in Drehzahlordnung auf, da dem ersten Planetenradsatz P1 nur drei Zentralräder zugeordnet sind, nämlich die zwei als Sonnenräder ausgebildete Zentralräder E111, E112 sowie das als Hohlrad ausgebildete Zentralrad E311. Das Getriebe G3 unterscheidet sich ferner durch die grundlegend andere Zuordnung der Schaltelemente zu den nunmehr fünf Wellen der beiden Planetenradsätze P1, P2. Das als Sonnenrad ausgebildete Zentralrad E111, welches mit dem größeren Wirkdurchmesser der Planetenräder PL1 kämmt, ist durch ein erstes Schaltelement 03c drehfest festsetzbar. Die Sonnrad-Hohlrad-Koppelung zwischen den beiden Planetenradsätzen P1, P2 ist durch ein zweites Schaltelement 04c drehfest festsetzbar. Das als Sonnenrad ausgebildete Zentralrad E111 ist über ein drittes Schaltelement 13c mit der Antriebswelle GW1 des Getriebes G3 verbindbar. Das als Hohlrad ausgebildete Zentralrad E32 des zweiten Planetenradsatzes P2 ist über ein viertes Schaltelement 15c mit der Antriebswelle GW1 verbindbar. Das als Sonnenrad ausgebildete Zentralrad E112, welches mit dem kleineren Wirkdurchmesser der Planetenräder PL1 kämmt, ist über ein fünftes Schaltelement 16c mit der Antriebswelle GW1 verbindbar. Falls das Getriebe G3 die Bildung von mechanischen Rückwärtsgängen zwischen der Antriebswelle GW1 und der Abtriebswelle GW2 ermöglichen soll, so ist das als Hohlrad ausgebildete Zentralrad E32 des zweiten Planetenradsatzes P2 drehfest festsetzbar auszubilden. Dafür ist ein sechstes Schaltelement 05c vorzusehen. In gleicher Weise wie im Getriebe G entsprechend dem zweiten Ausführungsbeispiel kann das Getriebe G3 eine elektrische Maschine EM aufweisen, deren drehbarer Rotor mit der Antriebswelle GW1 ständig verbunden ist. Zur Entkoppelung einer getriebeexternen Antriebseinheit kann dazu eine Trennkupplung K0 vorgesehen sein, durch welche die getriebeexterne Antriebseinheit mit der Antriebswelle GW1 des Getriebes G3 verbindbar ist. Die getriebeexterne Antriebseinheit ist in diesem Fall mit einer Anschlusswelle AN verbunden, welche über die Trennkupplung K0 mit der Antriebswelle GW1 verbindbar ist. Dies ist aus Gründen der Übersichtlichkeit nicht in den Figuren dargestellt.

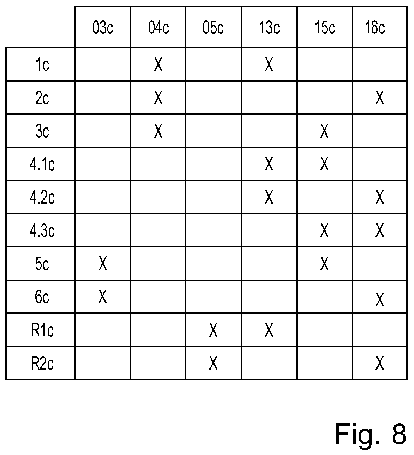

Figur 8 zeigt ein Schaltschema für das Getriebe G3 entsprechend dem vierten Ausführungsbeispiel der Erfindung. In den Zeilen des Schaltschemas sind sechs Vorwärtsgänge 1c bis 6c sowie zwei Rückwärtsgänge R1c, R2c angegeben. In den Spalten des Schaltschemas ist durch ein X gekennzeichnet, welche der Schaltelemente 03c, 04c, 13c, 15c, 16c, 05c in welchem Vorwärtsgang 1c bis 6c, beziehungsweise Rückwärtsgang R1c, R2c geschlossen sind. Das Schaltschema zeigt drei als 4,1c, 4,2c, 4,3c bezeichnete Varianten zur Bildung des vierten Vorwärtsganges, in welchem zwei der fünf Wellen der beiden Planetenradsätze P1, P2 mit der Antriebswelle GW1 verbunden sind. Die als 4,1c und 4,3c bezeichneten Varianten des vierten Vorwärtsganges sind dabei besonders vorteilhaft, da bei einem Schaltvorgang in den dritten Vorwärtsgang 3c oder in den fünften Vorwärtsgang 5c das vierte Schaltelement 15c geschlossen bleiben kann.

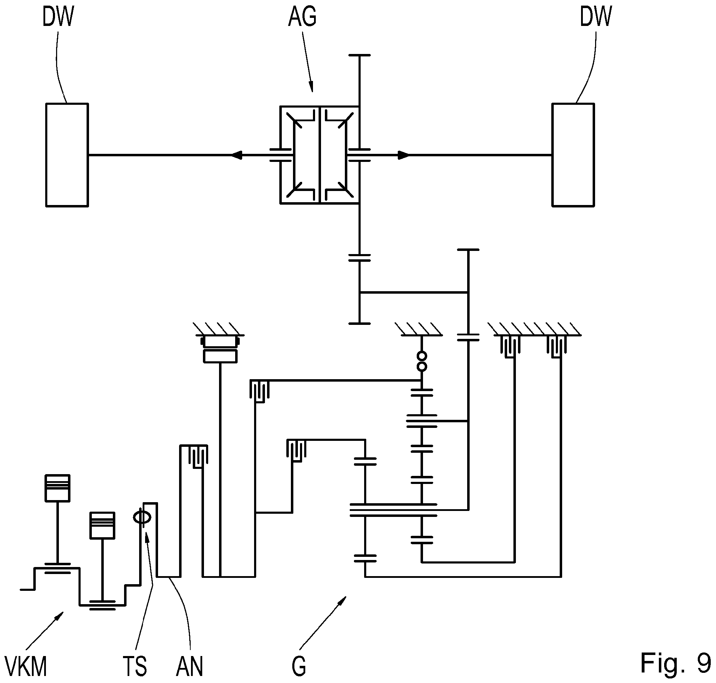

Figur 9 zeigt schematisch einen Antriebsstrang eines Kraftfahrzeuges mit dem Getriebe G gemäß dem in Figur 4 dargestellten zweiten Ausführungsbeispiel. Dies ist lediglich beispielhaft anzusehen. Der Antriebsstrang könnte mit jedem der angeführten Ausführungsbeispiele ausgeführt sein. Eine Verbrennungskraftmaschine VKM ist über einen Torsionsschwingungsdämpfer TS drehelastisch mit der Anschlusswelle AN des Getriebes G verbunden. Die Abtriebswelle GW2 des Getriebes G ist über einen Zwischenradsatz mit einem Achsgetriebe AG verbunden, welches die Antriebsleistung auf zwei Antriebsräder DW des Kraftfahrzeugs verteilt.

### Bezugszeichen

- GG: Gehäuse
- G: Getriebe
- P1: Erster Planetenradsatz
- E111: Zentralrad des ersten Planetenradsatzes
- E112: Zentralrad des ersten Planetenradsatzes
- E311: Zentralrad des ersten Planetenradsatzes
- E312: Zentralrad des ersten Planetenradsatzes
- E21: Steg des ersten Planetenradsatzes
- PL1: Planetenräder des ersten Planetenradsatzes
- P2: Zweiter Planetenradsatz
- E12: Zentralrad des zweiten Planetenradsatzes
- E32: Zentralrad des zweiten Planetenradsatzes
- E22: Steg des zweiten Planetenradsatzes
- 03: Erstes Schaltelement
- 04: Zweites Schaltelement
- 05: Drittes Schaltelement
- 15: Viertes Schaltelement
- 16: Fünftes Schaltelement
- 13: Sechstes Schaltelement
- 1: Erster Vorwärtsgang
- 2: Zweiter Vorwärtsgang
- 3: Dritter Vorwärtsgang
- 4: Vierter Vorwärtsgang
- 5: Fünfter Vorwärtsgang
- 6: Sechster Vorwärtsgang
- R1: Rückwärtsgang
- R2: Rückwärtsgang
- G2: Getriebe
- 03b: Erstes Schaltelement
- 05b: Zweites Schaltelement
- 06b: Drittes Schaltelement
- 13b: Viertes Schaltelement
- 16b: Fünftes Schaltelement
- 17b: Sechstes Schaltelement
- R1b: Rückwärtsgang
- R2b: Rückwärtsgang
- 1b: Erster Vorwärtsgang
- 2b: Zweiter Vorwärtsgang
- 3b: Dritter Vorwärtsgang
- 4.1b: Vierter Vorwärtsgang
- 4.2b: Vierter Vorwärtsgang
- 4.3b: Vierter Vorwärtsgang
- 5b: Fünfter Vorwärtsgang
- 6b: Sechster Vorwärtsgang
- G3: Getriebe
- 03c: Erstes Schalelement
- 05c: Zweites Schaltelement
- 04c: Drittes Schaltelement
- 13c: Viertes Schaltelement
- 15c: Fünftes Schaltelement
- 16c: Sechstes Schaltelement
- 1c: Erster Vorwärtsgang
- 2c: Zweiter Vorwärtsgang
- 3c: Dritter Vorwärtsgang
- 4,1c: Vierter Vorwärtsgang
- 4,2c: Vierter Vorwärtsgang
- 4,3c: Vierter Vorwärtsgang
- 5c: Fünfter Vorwärtsgang
- 6c: Sechster Vorwärtsgang
- R1c: Rückwärtsgang
- R2c: Rückwärtsgang
- RSE: Radsatzebene
- GW1: Antriebswelle
- GW2: Abtriebswelle
- EM: Elektrische Maschine
- S: Stator
- R: Rotor
- n: Drehzahl der Antriebswelle
- K0: Trennkupplung
- VKM: Verbrennungskraftmaschine
- TS: Torsionsschwingungsdämpfer
- AG: Achsgetriebe
- DW: Antriebsräder

## Patentansprüche

1. Getriebe (G) für ein Kraftfahrzeug, mit einem als Stufenplanetenradsatz ausgebildeten ersten Planetenradsatz (P1) und einem zweiten Planetenradsatz (P2),
- wobei Planetenräder (PL1) des ersten Planetenradsatzes (P1) zumindest zwei unterschiedlich große Wirkdurchmesser aufweisen,
- wobei der erste Planetenradsatz (P1) zumindest drei Zentralräder (E111, E112, E311, E312) aufweist, welche durch ein Hohlrad (E311) und zwei Sonnenräder (E111, E112) oder durch zwei Hohlräder (E311, E312) und ein Sonnenrad (E111) gebildet sind,
- wobei die zwei Sonnenräder (E111, E112) oder die zwei Hohlräder (E311, E312) unterschiedlichen Wirkdurchmessern der Planetenräder (PL1) zugeordnet sind,
- wobei der zweite Planetenradsatz (P2) zwei Zentralräder (E12, E32) in Form eines Sonnenrads und eines Hohlrads aufweist, wobei eines der Zentralräder (E12, E32) des zweiten Planetenradsatzes (P2) mit einem der Zentralräder (E111, E112, E311, E312) des ersten Planetenradsatzes (P1) ständig drehfest verbunden ist,
**dadurch gekennzeichnet, dass**
- das Zentralrad (E12, E32) des zweiten Planetenradsatzes (P2) sich von der Art jenes Zentralrades (E111, E112, E311, E312) des ersten Planetenradsatzes (P1), mit dem es ständig drehfest verbunden ist, unterscheidet, und in einer gemeinsamen Radsatzebene (RSE) mit diesem Zentralrad (E111, E112, E311, E312) angeordnet ist,
- wobei ein Steg (E21) des ersten Planetenradsatzes (P1) mit einem Steg (E22) des zweiten Planetenradsatzes (P2) ständig drehfest verbunden ist.

2. Getriebe (G) nach Anspruch 1, **dadurch gekennzeichnet, dass** die miteinander verbundenen Stege (E21, E22) des ersten und zweiten Planetenradsatzes (P1, P2) mit einer Abtriebswelle (GW2) des Getriebes (G) ständig verbunden sind.

3. Getriebe (G) nach einem der Ansprüche 1 bis 2, **dadurch gekennzeichnet, dass** der erste Planetenradsatz (P1) vier Zentralräder (E111, E112, E311, E312) aufweist, welche durch zwei Sonnenräder (E111, E112) und durch zwei Hohlräder (E311, E312) gebildet sind.

4. Getriebe (G) nach einem der Ansprüche 1 bis 3, **dadurch gekennzeichnet, dass** zumindest eines der Zentralräder (E111, E112, E311, E312) des ersten Planetenradsatzes (P1), welches mit keinem der Zentralräder (E12, E32) des zweiten Planetenradsatz (P2) ständig drehfest verbunden ist, mittels einem Schaltelement (03, 04) drehfest festsetzbar ist.

5. Getriebe (G) nach einem der Ansprüche 1 bis 4, **dadurch gekennzeichnet, dass** jenes Zentralrad (E32) des zweiten Planetenradsatzes (P2), welches mit keinem der Zentralräder (E111, E112, E311, E312) des ersten Planetenradsatzes (P1) ständig drehfest verbunden ist, mittels einem Schaltelement (05) drehfest festsetzbar ist.

6. Getriebe (G) nach einem der Ansprüche 1 bis 5, **dadurch gekennzeichnet, dass** zumindest eines der Zentralräder (E111, E112, E311, E312) des ersten Planetenradsatzes (P1), welches mit keinem der Zentralräder (E12, E32) des zweiten Planetenradsatz (P2) ständig drehfest verbunden ist, mittels einem Schaltelement (13, 16) mit einer Antriebswelle (GW1) des Getriebes (G) verbindbar ist.

7. Getriebe (G) nach einem der Ansprüche 1 bis 6, **dadurch gekennzeichnet, dass** jenes Zentralrad (E32) des zweiten Planetenradsatzes (P2), welches mit keinem der Zentralräder (E111, E112, E311, E312) des ersten Planetenradsatzes (P1) ständig drehfest verbunden ist, mittels einem Schaltelement (15) mit der Antriebswelle (GW1) verbindbar ist.

8. Getriebe (G) nach einem der Ansprüche 1 bis 3, **dadurch gekennzeichnet, dass** das als Sonnenrad ausgebildete Zentralrad (E12) des zweiten Planetenradsatzes (P2) mit jenem als Hohlrad ausgebildeten Zentralrad (E312) des ersten Planetenradsatzes (P1) ständig drehfest verbunden ist, welches mit dem kleineren Wirkdurchmesser der Planetenräder (PL1) kämmt.

9. Getriebe (G) nach Anspruch 8, **dadurch gekennzeichnet, dass** das als Sonnenrad ausgebildete Zentralrad (E111) des ersten Planetenradsatzes (P1), welches mit dem größeren Wirkdurchmesser der Planetenräder (PL1) kämmt, durch Schließen eines ersten Schaltelements (03) drehfest festsetzbar ist, wobei das als Sonnenrad ausgebildete Zentralrad (E112) des ersten Planetenradsatzes (P1), welches mit dem kleineren Wirkdurchmesser der Planetenräder (PL1) kämmt, durch Schließen eines zweiten Schaltelements (04) drehfest festsetzbar ist.

10. Getriebe (G) nach Anspruch 8 oder Anspruch 9, **dadurch gekennzeichnet, dass** das als Hohlrad ausgebildete Zentralrad (E32) des zweiten Planetenradsatzes (P2) durch Schließen eines dritten Schaltelements (05) drehfest festsetzbar ist.

11. Getriebe (G) nach einem der Ansprüche 8 bis 10, **dadurch gekennzeichnet, dass** das als Hohlrad ausgebildete Zentralrad (E32) des zweiten Planetenradsatzes (P2) durch Schließen eines vierten Schaltelements (15) mit der Antriebswelle (GW1) verbindbar ist.

12. Getriebe (G) nach einem der Ansprüche 8 bis 11, **dadurch gekennzeichnet, dass** das als Hohlrad ausgebildete Zentralrad (E311) des ersten Planetenradsatzes (P1), welches mit dem größeren Wirkdurchmesser der Planetenräder (PL1) kämmt, durch Schließen eines fünften Schaltelements (16) mit der Antriebswelle (GW1) verbindbar ist.

13. Getriebe (G) mit den Merkmalen der Ansprüche 8 bis 12, **dadurch gekennzeichnet, dass** durch selektives paarweises Schließen der fünf Schaltelemente (03, 04, 05, 15, 16) sechs Vorwärtsgänge zwischen der Antriebswelle (GW1) und der Abtriebswelle (GW2) bildbar sind, wobei sich
- der erste Vorwärtsgang (1) durch Schließen des dritten Schaltelements (05) und des fünften Schaltelements (16),
- der zweite Vorwärtsgang (2) durch Schließen des zweiten Schaltelements (04) und des fünften Schaltelements (16),
- der dritte Vorwärtsgang (3) durch Schließen des ersten Schaltelements (03) und des fünften Schaltelements (16),
- der vierte Vorwärtsgang (4) durch Schließen des vierten Schaltelements (15) und des fünften Schaltelements (16),
- der fünfte Vorwärtsgang (5) durch Schließen des ersten Schaltelements (03) und des vierten Schaltelements (15), und
- der sechste Vorwärtsgang (6) sich durch Schließen des zweiten Schaltelements (04) und des vierten Schaltelements (15) ergibt.

14. Getriebe (G) nach einem der Ansprüche 8 bis 12, **dadurch gekennzeichnet, dass** das als Sonnenrad ausgebildete Zentralrad (E111) des ersten Planetenradsatzes (P1), welches mit dem größeren Wirkdurchmesser der Planetenräder (PL1) kämmt, durch Schließen eines sechsten Schaltelements (13) mit der Antriebswelle (GW1) verbindbar ist.

15. Getriebe (G) nach Anspruch 14 und mit den Merkmalen der Ansprüche 8 bis 12, **dadurch gekennzeichnet, dass** sich ein Rückwärtsgang (R1) durch Schließen des dritten Schaltelements (05) und des sechsten Schaltelements (13) ergibt.

16. Getriebe (G) nach einem der vorangehenden Ansprüche, **dadurch gekennzeichnet, dass** das Getriebe (G) eine elektrische Maschine (EM) mit einem drehfesten Stator (S) und einem drehbaren Rotor (R) aufweist, wobei der Rotor (R) mit der Antriebswelle (GW1) ständig verbunden ist.

## Claims

1. Transmission (G) for a motor vehicle, with a first planetary gear set (P1), which is configured as a multistep planetary gear set, and a second planetary gear set (P2),
- planetary gears (PL1) of the first planetary gear set (P1) having at least two active diameters of different size,
- the first planetary gear set (P1) having at least three central gears (E111, E112, E311, E312) which are formed by way of an internal gear (E311) and two sun gears (E111, E112) or by way of two internal gears (E311, E312) and a sun gear (E111),
- the two sun gears (E111, E112) or the two internal gears (E311, E312) being assigned to different active diameters of the planetary gears (PL1),
- the second planetary gear set (P2) having two central gears (E12, E32) in the form of a sun gear and an internal gear, one of the central gears (E12, E32) of the second planetary gear set (P2) being permanently connected fixedly to one of the central gears (E111, E112, E311, E312) of the first planetary gear set (P1) as to rotate with it,
**characterized in that**
- the central gear (E12, E32) of the second planetary gear set (P2) differs from the type of that central gear (E111, E112, E311, E312) of the first planetary gear set (P1), to which it is permanently connected fixedly so as to rotate with it, and is arranged in a common gear set plane (RSE) with the said central gear (E111, E112, E311, E312),
- a spider (E21) of the first planetary gear set (P1) being permanently connected fixedly to a spider (E22) of the second planetary gear set (P2) so as to rotate with it.

2. Transmission (G) according to Claim 1, **characterized in that** the spiders (E21, E22), which are connected to one another, of the first and second planetary gear set (P1, P2) are permanently connected to an output shaft (GW2) of the transmission (G).

3. Transmission (G) according to either of Claims 1 and 2, **characterized in that** the first planetary gear set (P1) has four central gears (E111, E112, E311, E312) which are formed by way of two sun gears (E111, E112) and by way of two internal gears (E311, E312).

4. Transmission (G) according to one of Claims 1 to 3, **characterized in that** at least one of the central gears (E111, E112, E311, E312) of the first planetary gear set (P1), which at least one central gear (E111, E112, E311, E312) is not permanently connected fixedly to any of the central gears (E12, E32) of the second planetary gear set (P2) so as to rotate with it, can be fixed in a rotationally locked manner by means of a shifting element (03, 04).

5. Transmission (G) according to one of Claims 1 to 4, **characterized in that** that central gear (E32) of the second planetary gear set (P2) which is not permanently connected fixedly to any of the central gears (E111, E112, E311, E312) of the first planetary gear set (P1) so as to rotate with it can be fixed in a rotationally locked manner by means of a shifting element (05).

6. Transmission (G) according to one of Claims 1 to 5, **characterized in that** at least one of the central gears (E111, E112, E311, E312) of the first planetary gear set (P1), which at least one central gear (E111, E112, E311, E312) is not permanently connected fixedly to any of the central gears (E12, E32) of the second planetary gear set (P2) so as to rotate with it, can be connected by means of a shifting element (13, 16) to a drive shaft (GW1) of the transmission (G).

7. Transmission (G) according to one of Claims 1 to 6, **characterized in that** that central gear (E32) of the second planetary gear set (P2) which is not permanently connected fixedly to any of the central gears (E111, E112, E311, E312) of the first planetary gear set (P1) so as to rotate with it can be connected by means of a shifting element (15) to the drive shaft (GW1).

8. Transmission (G) according to one of Claims 1 to 3, **characterized in that** the central gear (E12), which is configured as a sun gear, of the second planetary gear set (P2) is permanently connected fixedly to that central gear (E312), which is configured as an internal gear, of the first planetary gear set (P1) so as to rotate with it, which central gear (E312) meshes with the smaller active diameter of the planetary gears (PL1).

9. Transmission (G) according to Claim 8, **characterized in that** the central gear (E111), which is configured as a sun gear and meshes with the larger active diameter of the planetary gears (PL1), of the first planetary gear set (P1) can be fixed in a rotationally locked manner by way of closing of a first shifting element (03), it being possible for the central gear (E112), which is configured as a sun gear and meshes with the smaller active diameter of the planetary gears (PL1), of the first planetary gear set (P1) to be fixed in a rotationally locked manner by way of closing of a second shifting element (04).

10. Transmission (G) according to Claim 8 or Claim 9, **characterized in that** the central gear (E32), which is configured as an internal gear, of the second planetary gear set (P2) can be fixed in a rotationally locked manner by way of closing of a third shifting element (05).

11. Transmission (G) according to one of Claims 8 to 10, **characterized in that** the central gear (E32), which is configured as an internal gear, of the second planetary gear set (P2) can be connected to the drive shaft (GW1) by way of closing of a fourth shifting element (15).

12. Transmission (G) according to one of Claims 8 to 11, **characterized in that** the central gear (E311), which is configured as an internal gear and meshes with the larger active diameter of the planetary gears (PL1), of the first planetary gear set (P1) can be connected to the drive shaft (GW1) by way of closing of a fifth shifting element (16).

13. Transmission (G) with the features of Claims 8 to 12, **characterized in that** six forward gears can be formed between the drive shaft (GW1) and the output shaft (GW2) by way of selective closing in pairs of the five shifting elements (03, 04, 05, 15, 16),
- the first forward gear (1) resulting by way of closing of the third shifting element (05) and the fifth shifting element (16),
- the second forward gear (2) resulting by way of closing of the second shifting element (04) and the fifth shifting element (16),
- the third forward gear (3) resulting by way of closing of the first shifting element (03) and the fifth shifting element (16),
- the fourth forward gear (4) resulting by way of closing of the fourth shifting element (15) and the fifth shifting element (16),
- the fifth forward gear (5) resulting by way of closing of the first shifting element (03) and the fourth shifting element (15), and
- the sixth forward gear (6) resulting by way of closing of the second shifting element (04) and the fourth shifting element (15).

14. Transmission (G) according to one of Claims 8 to 12, **characterized in that** the central gear (E111), which is configured as a sun gear and meshes with the larger active diameter of the planetary gears (PL1), of the first planetary gear set (P1) can be connected to the drive shaft (GW1) by way of closing of a sixth shifting element (13) .

15. Transmission (G) according to Claim 14 and with the features of Claims 8 to 12, **characterized in that** a reverse gear (R1) results by way of closing of the third shifting element (05) and the sixth shifting element (13) .

16. Transmission (G) according to one of the preceding claims, **characterized in that** the transmission (G) has an electric machine (EM) with a rotationally fixed stator (S) and a rotatable rotor (R), the rotor (R) being connected permanently to the drive shaft (GW1).

## Revendications

1. Boîte de vitesses (G) pour un véhicule automobile, comprenant un premier train planétaire (P1) réalisé sous forme de train planétaire étagé et un deuxième train planétaire (P2),
- dans laquelle des satellites (PL1) du premier train planétaire (P1) présentent au moins deux diamètres effectifs de tailles différentes,
- dans laquelle le premier train planétaire (P1) comprend au moins trois pignons centraux (E111, E112, E311, E312), lesquels sont formés par une couronne (E311) et deux pignons planétaires (E111, E112) ou par deux couronnes (E311, E312) et un pignon planétaire (E111),
- dans laquelle les deux pignons planétaires (E111, E112) ou les deux couronnes (E311, E312) sont associés à différents diamètres effectifs des satellites (PL1),
- dans laquelle le deuxième train planétaire (P2) comprend deux pignons centraux (E12, E32) sous la forme d'un pignon planétaire et d'une couronne, dans laquelle l'un des pignons centraux (E12, E32) du deuxième train planétaire (P2) est relié en permanence de manière solidaire en rotation à l'un des pignons centraux (E111, E112, E311, E312) du premier train planétaire (P1), **caractérisée en ce que**
- le pignon central (E12, E32) du deuxième train planétaire (P2) diffère du type du pignon central (E111, E112, E311, E312) du premier train planétaire (P1) auquel il est relié en permanence de manière solidaire en rotation, et est disposé dans un plan de train de pignons commun (RSE) avec ce pignon central (E111, E112, E311, E312),
- dans laquelle un porte-satellites (E21) du premier train planétaire (P1) est relié en permanence de manière solidaire en rotation à un porte-satellites (E22) du deuxième train planétaire (P2).

2. Boîte de vitesses (G) selon la revendication 1, **caractérisée en ce que** les portes-satellites (E21, E22) reliés l'un à l'autre du premier et du deuxième train planétaire (P1, P2) sont reliés en permanence à un arbre de sortie (GW2) de la boîte de vitesses (G).

3. Boîte de vitesses (G) selon l'une des revendications 1 et 2, **caractérisée en ce que** le premier train planétaire (P1) comprend quatre pignons centraux (E111, E112, E311, E312), lesquels sont formés par deux pignons planétaires (E111, E112) et par deux couronnes (E311, E312).

4. Boîte de vitesses (G) selon l'une des revendications 1 à 3, **caractérisée en ce qu'**au moins l'un des pignons centraux (E111, E112, E311, E312) du premier train planétaire (P1), lequel n'est relié en permanence de manière solidaire en rotation à aucun des pignons centraux (E12, E32) du deuxième train planétaire (P2), peut être fixé de manière bloquée en rotation au moyen d'un élément de changement de vitesses (03, 04).

5. Boîte de vitesses (G) selon l'une des revendications 1 à 4, **caractérisée en ce que** le pignon central (E32) du deuxième train planétaire (P2) qui n'est relié en permanence de manière solidaire en rotation à aucun des pignons centraux (E111, E112, E311, E312) du premier train planétaire (P1) peut être fixé de manière bloquée en rotation au moyen d'un élément de changement de vitesses (05).

6. Boîte de vitesses (G) selon l'une des revendications 1 à 5, **caractérisée en ce qu'**au moins l'un des pignons centraux (E111, E112, E311, E312) du premier train planétaire (P1), lequel n'est relié en permanence de manière solidaire en rotation à aucun des pignons centraux (E12, E32) du deuxième train planétaire (P2), peut être relié à un arbre d'entraînement (GW1) de la boîte de vitesses (G) au moyen d'un élément de changement de vitesses (13, 16).

7. Boîte de vitesses (G) selon l'une des revendications 1 à 6, **caractérisée en ce que** le pignon central (E32) du deuxième train planétaire (P2) qui n'est relié en permanence de manière solidaire en rotation à aucun des pignons centraux (E111, E112, E311, E312) du premier train planétaire (P1) peut être relié à l'arbre d'entraînement (GW1) au moyen d'un élément de changement de vitesses (15).

8. Boîte de vitesses (G) selon l'une des revendications 1 à 3, **caractérisée en ce que** le pignon central (E12) réalisé sous forme de pignon planétaire du deuxième train planétaire (P2) est relié en permanence de manière solidaire en rotation au pignon central (E312) réalisé sous forme de couronne du premier train planétaire (P1) qui s'engrène avec le plus petit diamètre effectif des satellites (PL1).

9. Boîte de vitesses (G) selon la revendication 8, **caractérisée en ce que** le pignon central (E111) réalisé sous forme de pignon planétaire du premier train planétaire (P1), lequel s'engrène avec le plus grand diamètre effectif des satellites (PL1), peut être fixé de manière bloquée en rotation par fermeture d'un premier élément de changement de vitesses (03), le pignon central (E112) réalisé sous forme de pignon planétaire du premier train planétaire (P1), lequel s'engrène avec le plus petit diamètre effectif des satellites (PL1), pouvant être fixé de manière bloquée en rotation par fermeture d'un deuxième élément de changement de vitesses (04).

10. Boîte de vitesses (G) selon la revendication 8 ou la revendication 9, **caractérisée en ce que** le pignon central (E32) réalisé sous forme de couronne du deuxième train planétaire (P2) peut être fixé de manière bloquée en rotation par fermeture d'un troisième élément de changement de vitesses (05).

11. Boîte de vitesses (G) selon l'une des revendications 8 à 10, **caractérisée en ce que** le pignon central (E32) réalisé sous forme de couronne du deuxième train planétaire (P2) peut être relié à l'arbre d'entraînement (GW1) par fermeture d'un quatrième élément de changement de vitesses (15).

12. Boîte de vitesses (G) selon l'une des revendications 8 à 11, **caractérisée en ce que** le pignon central (E311) réalisé sous forme de couronne du premier train planétaire (P1), lequel s'engrène avec le plus grand diamètre effectif des satellites (PL1), peut être relié à l'arbre d'entraînement (GW1) par fermeture d'un cinquième élément de changement de vitesses (16).

13. Boîte de vitesses (G) présentant les caractéristiques des revendications 8 à 12, **caractérisée en ce que**, par fermeture sélective par paires des cinq éléments de changement de vitesses (03, 04, 05, 15, 16), six rapports de marche avant entre l'arbre d'entraînement (GW1) et l'arbre de sortie (GW2) peuvent être formés,
- le premier rapport de marche avant (1) étant produit par fermeture du troisième élément de changement de vitesses (05) et du cinquième élément de changement de vitesses (16),
- le deuxième rapport de marche avant (2) étant produit par fermeture du deuxième élément de changement de vitesses (04) et du cinquième élément de changement de vitesses (16),
- le troisième rapport de marche avant (3) étant produit par fermeture du premier élément de changement de vitesses (03) et du cinquième élément de changement de vitesses (16),
- le quatrième rapport de marche avant (4) étant produit par fermeture du quatrième élément de changement de vitesses (15) et du cinquième élément de changement de vitesses (16),
- le cinquième rapport de marche avant (5) étant produit par fermeture du premier élément de changement de vitesses (03) et du quatrième élément de changement de vitesses (15), et
- le sixième rapport de marche avant (6) étant produit par fermeture du deuxième élément de changement de vitesses (04) et du quatrième élément de changement de vitesses (15).

14. Boîte de vitesses (G) selon l'une des revendications 8 à 12, **caractérisée en ce que** le pignon central (E111) réalisé sous forme de pignon planétaire du premier train planétaire (P1), lequel s'engrène avec le plus grand diamètre effectif des satellites (PL1), peut être relié à l'arbre d'entraînement (GW1) par fermeture d'un sixième élément de changement de vitesses (13).

15. Boîte de vitesses (G) selon la revendication 14 et présentant les caractéristiques des revendications 8 à 12, **caractérisée en ce qu'**un rapport de marche arrière (R1) est produit par fermeture du troisième élément de changement de vitesses (05) et du sixième élément de changement de vitesses (13).

16. Boîte de vitesses (G) selon l'une des revendications précédentes, **caractérisée en ce que** la boîte de vitesses (G) comprend un moteur électrique (EM) doté d'un stator (S) bloqué en rotation et d'un rotor rotatif (R), le rotor (R) étant relié en permanence à l'arbre d'entraînement (GW1).
